# EUROPÄISCHE PATENTSCHRIFT

(11) **EP 3 841 324 B1**
(45) Veröffentlichungstag und Bekanntmachung des Hinweises auf die Patenterteilung: **27.09.2023**
(21) Anmeldenummer: 19762693.0
(22) Anmeldetag: 20.08.2019
(51) Int. Cl.: F17C 13/00, B22F 3/105, C23C 24/04, B33Y 10/00, F17C 1/02

(54) **VERFAHREN ZUR HERSTELLUNG EINES LEICHTBAU-DRUCKTANKS UND LEICHTBAU-DRUCKTANK**
METHOD FOR PRODUCING A LIGHT-WEIGHT PRESSURE TANK AND LIGHT-WEIGHT PRESSURE TANK
PROCÉDÉ POUR PRODUIRE UN RÉSERVOIR SOUS PRESSION LÉGER ET RÉSERVOIR SOUS PRESSION LÉGER

(30) Priorität: 21.08.2018 DE 102018120291; 21.08.2018 DE 102018120293
(43) Veröffentlichungstag der Anmeldung: 30.06.2021
(73) Patentinhaber: LARCH, Sascha, 86356 Neusäss (DE)
(72) Erfinder: LARCH, Sascha, 86356 Neusäss (DE)
(74) Vertreter: Schlimme, Wolfram
(86) Internationale Anmeldenummer: PCT/EP2019/072247
(87) Internationale Veröffentlichungsnummer: WO 2020/038930

(56) Entgegenhaltungen:
- EP-A1- 3 333 474
- WO-A1-2017/114584
- DE-A1-102013 216 439
- FR-A1- 3 025 491

## Beschreibung

### TECHNISCHES GEBIET

Die vorliegende Erfindung betrifft ein Verfahren zur Herstellung eines Leichtbau-Drucktanks nach dem Patentanspruch 1. Insbesondere betrifft die Erfindung ein Verfahren zur Herstellung eines Satelliten-, Raumfahrzeug- oder Raketentanks sowie einen mit diesem Verfahren hergestellten Satelliten-, Raumfahrzeug- oder Raketentank. Allerdings ist die Erfindung nicht auf diese Anwendungsbereiche beschränkt, sondern umfasst selbstverständlich auch stationär oder in Landfahrzeugen, Wasserfahrzeugen oder Luftfahrzeugen verwendbare Leichtbau-Drucktanks, wie sie beispielsweise zur Speicherung von komprimierten Gasen wie zum Beispiel Wasserstoff eingesetzt werden.

### HINTERGRUND DER ERFINDUNG

Druckbehälter, die einem hohen Innendruck gegenüber einem niedrigeren Außendruck standhalten müssen, sind allgemein bekannt. Üblicherweise werden derartige Druckbehälter aus Metallblechen gefertigt, die entweder aus zwei miteinander verschweißten Kugelhälften bestehen oder die einen zylindrischen Behälterabschnitt aufweisen, mit dem domartige Behälterböden verschweißt werden. Diese domartigen Behälterböden werden zumeist aus dreieckigen oder trapezförmigen Blechen hergestellt, die gebogen und zu einer Raumform miteinander verschweißt werden. Kritisch ist bei solchen, Schweißnähte aufweisenden Druckbehältern die Qualität der jeweiligen Schweißnaht, da auf jeden Fall zu vermeiden ist, dass der unter Druck gesetzte Druckbehälter an den möglicherweise Schwachstellen bildenden Schweißnähten reißt und platzt. Daher sind diese Schweißnähte mit größter Sorgfalt zu fertigen und der Druckbehälter ist regelmäßigen Drucktests zu unterziehen.

Eine besondere Herausforderung stellen Leichtbau-Druckbehälter dar, wie sie beispielsweise als Treibstofftanks in der Raumfahrttechnik verwendet werden. Bei diesen Tanks ist das Gewicht auf ein Minimum zu reduzieren, so dass es hier üblich geworden ist, den Behälter mit einer sehr dünnen Behälterwand und gegebenenfalls einer mit dieser dünnen Behälterwand verbundenen Stützstruktur auf der Behälterinnenseite oder der Behälteraußenseite auszugestalten. Dazu wird aus einem dicken Wandmaterial in spanabhebender Fertigung, beispielsweise durch Fräsen, auf der Innenseite des Behälters so viel Material abgetragen, dass eine dünne Wandhaut mit sich daran auf der Innenseite (oder der Außenseite) anschließenden Versteifungselementen, wie zum Beispiel Längsrippen und Spanten, ausbildet. Es liegt auf der Hand, dass ein derartiges Herstellungsverfahren zeit- und kostenaufwendig ist. Auch die dreieckigen oder trapezförmigen Segmente für die Herstellung des jeweiligen Behälterbodens werden auf diese Weise aus dem Vollen gefräst. Die so erhaltenen ebenen Komponenten werden dann, beispielsweise mittels Kugelstrahlen, umgeformt in räumlich gewölbte Dreiecke beziehungsweise Trapeze, die dann zur Bildung des domartigen Behälterbodens miteinander verschweißt werden. Dort wo Schweißnähte vorgesehen sind, muss bei der spanabhebenden Bearbeitung eine dickere Wandstärke erhalten bleiben, um das Schweißen zu ermöglichen, und die geringe Materialfestigkeit in der Schweißnaht zu kompensieren. Diese lokal dickere Wandstärke erhöht wiederum die Masse und damit das Gewicht des Druckbehälters.

Das Verschweißen der einzelnen Komponenten erfolgt üblicherweise durch Wolfram-Inertgasschweißen oder durch Rührreibschweißen, wozu spezielle Schweißanlagen erforderlich sind, die an die Geometrie und den Durchmesser der zu schweißenden Behälterböden angepasst sein müssen und die zu hohen Kosten als Sondermaschinenbau hergestellt werden müssen.

Bei der herkömmlichen Vorgehensweise zur Herstellung von Leichtbau-Druckbehältern, insbesondere von Raketentanks, ist somit nachteilig, dass die Herstellung der einzelnen Komponenten (einschließlich des zylindrischen Tankkörpers) durch Fräsen aus dem Vollen sowie das Verschweißen der Teile miteinander sehr zeit- und kostenaufwändig ist. Zudem müssen die einzelnen Körper im Bereich der Schweißnaht eine dickere Wandstärke aufweisen, als dies ohne Schweißnaht erforderlich wäre. Für diesen Fertigungsprozess bedarf es sehr großer Maschinen, die individuell für einen einzelnen Druckbehältertyp angefertigt werden müssen. Daher sind die Kosten zur Herstellung derartiger Druckbehälter (z.B. Raketentanks) extrem hoch und aufgrund des langen Vorlaufs für die zunächst zu erfolgende Konstruktion und Fertigung der speziellen Schweißanlagen ist ein sehr langer Zeitvorlauf erforderlich, bevor eine auf dem Reißbrett entwickelte Tankkonstruktion in einen ersten Prototyp umgesetzt werden kann.

### STAND DER TECHNIK

Thermische Spritzverfahren, wie beispielsweise das Kaltgasspritzen, werden üblicherweise zur Beschichtung von Oberflächen verwendet. Ein Kaltgasspritzverfahren zur Beschichtung von Oberflächen, bei welchem das Gas zunächst komprimiert und erwärmt und anschließend durch Entspannen in einer Düse beschleunigt wird, wobei in den Gasstrahl eingeleitete Partikel auf ein vorher aufgeheiztes Substrat geschossen werden, ist aus der DE 10 2006 044 612 A1 bekannt.

Aus der WO 2009/109016 A1 ist es weiterhin bekannt, das Verfahren des Kaltgasspritzens zur Herstellung von Rohren zu verwenden, wobei die später das Rohr bildenden Materialpartikel auf ein Trägerelement aufgespritzt werden, um das Rohr zu erzeugen. Anschließend wir das Trägerelement aus dem Rohr entfernt.

Aus der DE 10 2010 060 362 A1 ist es bekannt, beim Herstellen eines Rohres mittels eines thermischen Spritzverfahrens die Neigung der Spritzdüse, also den Spritzwinkel, relativ zu der zu beschichtenden Oberfläche zu verstellen und dadurch die Haftzugfestigkeit der erzeugten Materialschicht auf deren Untergrund zu verändern. Der Spritzwinkel wird dabei so gewählt, dass eine Haftung entsteht, die ausreicht, damit der Beschichtungswerkstoff an dem Trägerelement haftet, und die gleichzeitig so gering ist, dass das Rohr nach Fertigstellung ohne die Anwendung kostenintensiver Verfahrensschritte leichter vom Trägerelement gelöst werden kann.

Die DE 10 2015 017 026 A1 beschreibt Verfahren zum formwerkzeugfreien Herstellen von Druckbehältern, bei dem der Druckbehälter ganz oder teilweise mittels eines Sinter- oder Pulverdruckverfahrens aus Metall hergestellt wird. Dabei erfolgt ein schichtweises Aufschmelzen von in einem Metallpulvervorrat enthaltenem Metallpulver durch Elektronenstrahlschmelzen oder durch selektives Laserschmelzen. Alternativ wird angegeben, den Druckbehälter mittels Multi-Jet-Modeling aus flüssigem Kunststoffmaterial herzustellen, wobei das formend aus der Düse austretende Kunststoffmaterial unmittelbar nach dem Austritt mittels einer Energiequelle gehärtet wird. Es wird explizit darauf hingewiesen, dass bei diesen Verfahren auf eine Formeinrichtung vollständig verzichtet werden kann.

Die DE 10 2013 216 439 A1 zeigt und beschreibt ein Verfahren zum Erzeugen eines schalenförmigen Bauteils mittels Kaltgasspritzens. Dabei wird zunächst eine sogenannte Startstruktur bereitgestellt, die ringförmig ausgebildet ist. Diese Startstruktur ist entweder in Form eines Flanschringes mit einer zentralen Öffnung ausgebildet oder die Startstruktur wird mittels Kaltgasspritzens als ringförmige Startstruktur auf einem flachen Tisch hergestellt. Der Kaltgasstrahl trifft dabei auf die obere Fläche des Tisches, die bezüglich des herzustellenden kuppelartigen Körpers im Wesentlichen eine radiale Ebene bildet. Auch die auf diese Weise hergestellte Startstruktur ist an ihrer vom Tisch abgewandten Fläche, auf welcher später die Wandung des kuppelartigen Körpers hergestellt werden soll, parallel zur Oberfläche des Tisches, also ebenfalls im Wesentlichen als Radialebene, ausgebildet. Auch die andere Alternative der Startstruktur bildet eine ebene Fläche, die zum später erzeugten kuppelartigen Körper eine im Wesentlichen radiale Fläche darstellt.

Die Ausbildung der Wandung des zu erzeugenden kuppelartigen Körpers beginnt mit dem Auftragen von Material mittels eines Partikel dieses Materials aufweisenden Kaltgasstrahls auf den Stützkörper beziehungsweise und zwar jeweils auf dessen obere - in Radialrichtung des zu erstellenden kuppelartigen Körpers - verlaufende Startfläche. Dabei wird ein kugelförmiger Stützkörper am Rande der von der Startstruktur umgebenen Öffnung platziert, sodass dieser kugelförmige Stützkörper - geführt von einem programmierten Roboterarm - dynamisch eine Innenform für den zu erzeugenden kuppelförmigen Körper bildet. Auch die Kaltgasspritzdüse aus der der Kaltgasstrahl austritt, ist an einem Roboterarm befestigt und wird entsprechend programmiert geführt. Die Kaltgasspritzdüse wird dabei so ausgerichtet, dass der Kaltgasstrahl) zunächst auf die Startfläche und dann stets auf den Saum der in Herstellung befindlichen Wandung gerichtet ist. Der Kaltgasstrahl trifft dabei genau in einem Winkel von 90° auf den Saum der in Herstellung befindlichen Wandung. Zwar kann dieser Winkel geringfügig abweichen, doch es ist zu vermeiden, dass Partikel auf der Oberfläche des Stützkörpers abgeschieden werden.

Die EP 3 333 474 A1 zeigt und beschreibt einen dünnwandigen Behälter mit einem oberen domartigen Deckel, einem unterem domartigen Deckel und einem mittleren zylindrischen, rohrförmigen Abschnitt, wobei die Deckel mit dem zylindrischen, rohrförmigen Abschnitt verbunden, beispielsweise verschweißt, sind. Sowohl die domartigen Deckel als auch der zylindrische Abschnitt bestehen aus einer dünnen Mantelhaut, auf deren Innenseite mittels additiver Fertigung Verstärkungsrippen aufgebracht sind. Der Behälter kann entweder in seiner Gänze durch additive Fertigung hergestellt werden oder die domartigen Deckel können mit dem zylindrischen, rohrförmigen Abschnitt verschweißt werden.

Die WO 2017/114 584 A1 beschreibt ein Verfahren zur Herstellung von Wandteilen eines Gehäuses von Druckbehältern. Bei diesem Verfahren wird die Wand eines Druckbehälters mittels eines 3D-Druckverfahrens aus einem Metallpulver gebildet, wobei eine das Metallpulver ausstoßende Spritzdüse in Richtung der Wanddicke, also in Radialrichtung hin und her fährt und dabei schichtweise die Wand des Druckbehälters aufbaut. Um bei diesem Aufbau der Wand eines Druckbehälters insbesondere in einem kritischen Geometriebereich, in dem eine aufgetragene Wandschicht über eine vorher erzeugte Wandschicht in Wanddickenrichtung seitlich hinauskragt, eine Verformung des hinauskragten Abschnitt beim Abkühlen der Wandschicht zu verhindern und um den Einsatz eines Formkörpers zu vermeiden, wird die Schichtdicke gegenüber den vorher aufgetragenen Schichten vergrößert, wodurch ein spannungsfreies Materialabkühlverhalten des metallischen Auftragsmaterials erreicht werden soll.

### DARSTELLUNG DER ERFINDUNG

Aufgabe der vorliegenden Erfindung ist es daher, ein Verfahren anzugeben, mit dem ein Leichtbau-Drucktank mit einem Leichtbau-Druckbehälter schneller und kostengünstiger herstellbar ist.

Diese Aufgabe wird gelöst durch das Verfahren mit den Merkmalen des Anspruchs 1.

Ein Verfahren zur Herstellung eines Leichtbau-Drucktanks mit einem Leichtbau-Druckbehälter aus einem Metallmaterial mit zumindest einem polaren oder äquatorialen Befestigungselement und einer damit verbundenen Behälterwandung zeichnet sich erfindungsgemäß dadurch aus, dass zumindest die Behälterwandung durch additive Fertigung mittels eines thermischen Spritzverfahrens durch Auftragen des Metallmaterials durch einen Spritzstrahl mittels zumindest einer Spritzdüse einer thermischen Spritzvorrichtung auf eine Formoberfläche einer einen Formkörper bildenden gewölbten Schalungsform integral mit dem zumindest einen polaren oder äquatorialen Befestigungselement ausgebildet wird, mit den Schritten:
a) Bereitstellen des zumindest einen polaren oder äquatorialen Befestigungselements, das zumindest einen Befestigungsabschnitt und zumindest einen Behälterwandungsabschnitt aufweist, der einen Abschnitt der Behälterwandung des nach dem Verfahren hergestellten Leichtbau-Drucktanks bildet, wobei der Behälterwandungsabschnitt zumindest einen Umfangsrandbereich aufweist, dessen Wandstärke sich unter Ausbildung einer im Querschnitt schräg verlaufenden Kontaktfläche zum freien Umfangsrand hin verjüngt;
b) Positionieren des zumindest einen polaren oder äquatorialen Befestigungselements an oder auf der konkaven oder konvexen Formoberfläche der gewölbten Schalungsform derart, dass die Kontaktfläche von der Formoberfläche weg weist;
c) Auftragen des Metallmaterials durch einen auf die Formoberfläche gerichteten Spritzstrahl mittels zumindest einer Spritzdüse gemäß dem thermischen Spritzverfahren auf die Kontaktfläche des Befestigungselements und auf die Formoberfläche der gewölbten Schalungsform, wobei die thermische Spritzvorrichtung über die Formoberfläche hinweg wandert, zur Bildung eines sich nahtlos an die Kontaktfläche anschließenden und mit dem Behälterwandungsabschnitt integral ausgebildeten, gewölbten Behälterwandungselements;
d) Trennen der Einheit aus dem zumindest einen Befestigungselement und dem Behälterwandungselement von der gewölbten Schalungsform.

Insbesondere erfolgt die Herstellung mittels eines Kaltgasspritzverfahrens als thermisches Spritzverfahren. Das Auftragen des Metallmaterials durch den Spritzstrahl mittels der zumindest einen Spritzdüse auf die Formoberfläche der gewölbten Schalungsform kann bei allen Varianten des erfindungsgemäßen Verfahrens in einem einzigen Arbeitsgang oder vorzugsweise in mehreren konsekutiven Arbeitsgängen bevorzugt schichtweise erfolgen. Die Dicke der jeweils aufgesprühten Metallmaterialschicht ist dabei abhängig von der Bewegungsgeschwindigkeit der Spritzvorrichtung.

Die Schalungsform kann dabei eine Außenschalung oder eine Innenschalung sein, die bei einem integral gefertigten kugelförmigen Leichtbau-Druckbehälter eine verlorene Schalung bildet, die nach dem Fertigungsprozess beispielsweise aus dem Leichtbau-Druckbehälter ausgeschmolzen wird. Vorteilhaft ist es, wenn die Oberfläche der Schalungsform mit einem Trennmittel versehen ist, das das spätere Lösen des Werkstücks von der Schalungsform erleichtert.

### VORTEILE

Durch die erfindungsgemäße additive Fertigung zumindest der Behälterwandung kann die bislang in mehreren Fertigungsschritten aus zwei zunächst mit dem zumindest einen Befestigungselement und dann miteinander oder mit einem Zwischenwandungsstück verschweißten Halbschalen erfolgende Herstellung des Druckbehälters wesentlich vereinfacht werden. Wegen der integralen Fertigung können die Schweißnähte entfallen, was wiederum zur Folge hat, dass die Wandung durchgängig dünn sein kann, weil keine für den Schweißvorgang erforderlichen verdickten Wandungsbereiche vorgesehen sein müssen. Die Masse des erfindungsgemäß hergestellten Leichtbau-Drucktanks ist daher geringer als die eines herkömmlich hergestellten Drucktanks. Zudem entfällt das Risiko von unter Druckbeanspruchung und thermischer Wechselbeanspruchung reißenden Schweißnähten. Sowohl die Herstellungskosten als auch die für die Herstellung benötigte Zeit sind somit beim Verfahren der Erfindung gegenüber dem Stand der Technik deutlich verringert.

Weitere bevorzugte und vorteilhafte Ausgestaltungsmerkmale des erfindungsgemäßen Verfahrens sind Gegenstand der Unteransprüche 2 bis 8.

Vorzugsweise weist der Leichtbau-Druckbehälter einen kugelförmigen oder kugelähnlichen Raumkörper oder Rumpf auf, der durch Auftragen des Metallmaterials durch den Spritzstrahl mittels der zumindest einen Spritzdüse auf die eine Formoberfläche bildende konvexe Außenoberfläche oder konkave Innenoberfläche der kugelförmig oder kugelähnlich gewölbten Schalungsform nahtlos hergestellt wird. Derartige kugelförmige oder kugelähnliche Tanks sind für die Speicherung von gasförmigen oder verflüssigten Medien unter hohem Druck (zum Beispiel Sauerstoff oder Wasserstoff) besonders geeignet.

Der Begriff "kugelähnlich" bedeutet in diesem Zusammenhang, dass die Gestalt des Leichtbau-Druckbehälters einer Kugel ähnelt, aber mathematisch keine kugelige Raumform mit überall gleichem Radius aufweisen muss. So sind davon beispielsweise Ausführungsformen umfasst, bei denen die Raumform an den Polen abgeplattet ist oder hier eine weniger starke Krümmung aufweist oder bei denen im Äquatorialbereich ein im Verhältnis zum Krümmungsradius der kugeligen Wandabschnitte kurzer zylindrischer Abschnitt (beispielsweise mit einer Axialerstreckung von weniger als der Hälfte des Radius') vorgesehen ist oder bei denen im Äquatorialbereich die Krümmung entlang der die Pole aufweisenden Ebenen geringer ist als bei den kugeligen Wandabschnitten.

Vorteilhaft ist weiterhin, wenn die Bereitstellung des zumindest einen polaren oder äquatorialen Befestigungselements mit den folgenden Schritten erfolgt:
a1) Bereitstellen einer Befestigungselement-Schalungsform als Außenschalung oder als Innenschalung;
a2) Auftragen des Metallmaterials durch einen Spritzstrahl mittels zumindest einer Spritzdüse gemäß dem thermischen Spritzverfahren auf eine Formoberfläche am Innenumfang oder am Außenumfang der Befestigungselement-Schalungsform zur Bildung zumindest eines Befestigungsabschnitts und zumindest eines Behälterwandungsabschnitts;
a3) Ausbilden eines sich zum freien Umfangsrand hin verjüngenden Umfangsrandbereichs des Behälterwandungsabschnitts mit einer im Querschnitt schräg verlaufenden Kontaktfläche;
a4) Trennen des Befestigungselements von der Befestigungselement-Schalungsform.

Gemäß dieser Weiterbildung des erfindungsgemäßen Verfahrens erfolgt auch die Herstellung des zumindest einen polaren oder äquatorialen Befestigungselements mittels des thermischen Spritzverfahrens in oder auf einer Schalungsform, so dass hier die gleichen Vorteile auftreten, die bereits oben angeführt wurden.

Vorzugsweise wird die im Querschnitt schräg verlaufende Kontaktfläche nach dem Entnehmen des Befestigungselements aus der Befestigungselement-Schalungsform mechanisch bearbeitet, beispielsweise spanabhebend, um eine ebene und gegebenenfalls auch glatte Oberfläche der Kontaktfläche zu schaffen.

Eine weitere Ausführungsform des erfindungsgemäßen Verfahrens, die mit anderen Ausführungsformen kombinierbar ist, zeichnet sich dadurch aus, dass charakteristische Eigenschaften des Spritzstrahls der zumindest einen Spritzdüse geändert werden, wenn dieser von der im Querschnitt schräg verlaufenden Kontaktfläche weiter wandert und auf die Formoberfläche auftrifft, auf der noch kein Material mittels des thermischen Spritzverfahrens aufgetragen worden ist, und dass die charakteristischen Eigenschaften des Spritzstrahls wieder zurückgeändert werden, wenn dieser von der Formoberfläche, auf der noch kein Material mittels des thermischen Spritzverfahrens aufgetragen worden war, weiter wandert und auf die im Querschnitt schräg verlaufende Kontaktfläche auftrifft. Durch diese Änderung von charakteristischen Eigenschaften des Spritzstrahls, beispielsweise der Auftreffgeschwindigkeit der Metallmaterial-Partikel und/oder des Auftreffwinkels auf den Untergrund, wird erreicht, dass im Bereich des jeweiligen schräg verlaufenden Wandabschnitts, also der Kontaktfläche, eine feste und innige Materialanbindung an den hier vom Material der Kontaktfläche gebildeten Untergrund erfolgt, während dort, wo der Spritzstrahl auf die Formoberfläche auftrifft, von der das Werkstück, also zum Beispiel der Behälterwandungsabschnitt, später wieder gelöst werden muss, keine feste und innige Materialanbindung an den hier vom Material der Formoberfläche oder eines darauf befindlichen Trennmittels gebildeten Untergrund erfolgt, um das fertige Werkstück leichter von der Schalungsform trennen zu können.

Vorteilhaft bei allen Varianten des erfindungsgemäßen Verfahrens ist es auch, wenn nach der Fertigstellung der Einheit aus dem zumindest einen Befestigungselement und dem Behälterwandungselement eine thermische und/oder mechanische Behandlung zumindest des Behälterwandungselements durchgeführt wird. Durch eine solche thermische Behandlung können in dem mittels der erfindungsgemäßen additiven Fertigung erzeugten Werkstück Gefügeänderungen des Metallmaterials vorgenommen werden, die beispielsweise die Zähigkeit des Materials verändern und das Werkstück elastischer machen.

Besonders bevorzugt ist auch eine Variante des jeweiligen erfindungsgemäßen Verfahrens, bei der der fertige Leichtbau-Druckbehälter zumindest im Bereich seiner Behälterwandung mit einem Mantel aus einem Faserverbundwerkstoff umgeben wird. Hierdurch kann der metallene Leichtbau-Druckbehälter die Aufgabe des dichten Umschließens des in ihm gespeicherten Mediums übernehmen, während der Mantel aus Faserverbundwerkstoff die mechanischen Eigenschaften verbessert und dem Leichtbau-Drucktank die erforderliche Stabilität zur Abstützung der von Innen auf die metallene Wandungshaut wirkenden Druckkräfte verleiht.

Dabei ist es aus Gründen der Gewichtseinsparung besonders von Vorteil, wenn der den Leichtbau-Druckbehälter zumindest im Bereich seiner Behälterwandung umgebende Mantel aus Kohlefaser-Verbundwerkstoff besteht oder dieses Material aufweist.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: einen teilweise geschnittenen kugelartigen Leichtbau-Druckbehälter eines Leichtbau-Drucktanks gemäß einer für das Verständnis der Erfindung nützliche erste Ausführungsform,
- Fig. 2: einen teilweise geschnittenen kugelartigen Leichtbau-Druckbehälter eines Leichtbau-Drucktanks gemäß einer zweiten Ausführungsform gemäß der Erfindung,
- Fig. 3: eine vergrößerte Ausschnittdarstellung gemäß der Einzelheit III aus Fig. 2,
- Fig. 4: einen teilweise geschnittenen kugelartigen Leichtbau-Druckbehälter eines Leichtbau-Drucktanks gemäß einer dritten Ausführungsform gemäß der Erfindung,
- Fig. 5: eine vergrößerte Ausschnittdarstellung gemäß der Einzelheit V aus Fig. 4 und
- Fig. 6: eine Ansicht eines Leichtbau-Drucktanks mit einem teilweise geschnitten dargestellten Mantel aus einem Faserverbundwerkstoff.

### DARSTELLUNG VON BEVORZUGTEN AUSFÜHRUNGSBEISPIELEN

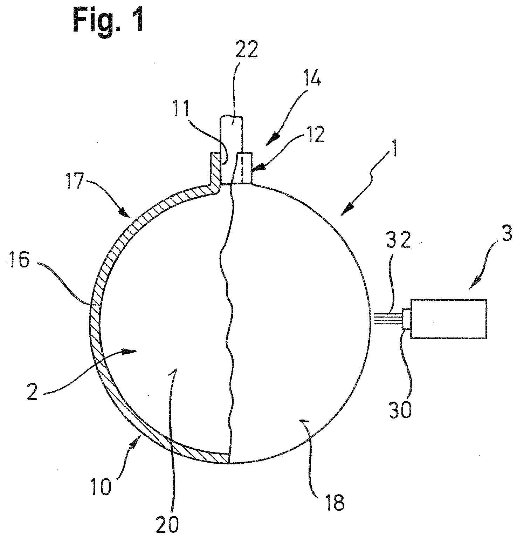

Fig. 1 zeigt einen teilweise aufgeschnittenen kugelartigen Leichtbau-Druckbehälter 1 in Form eines kugelförmigen Raumkörpers 10, der mit einem Stutzen 12 versehen ist, welcher ein polares Befestigungselement 14 bildet. Der Leichtbau-Druckbehälter 1 wird durch additive Fertigung mittels eines thermischen Spritzverfahrens, im gezeigten Beispiel mittels Kaltgasspritzens, integral mit einer einheitlichen kugelförmigen Wandung 16 des Raumkörpers 10 ausgebildet.

In Fig. 1 ist auch gezeigt, wie eine thermische Spritzvorrichtung 3 vor der Formoberfläche einer Schalungsform 2 positioniert ist und arbeitet. Diese Spritzvorrichtung 3 kann beispielsweise an einem Roboterarm angebracht sein. Aus einer Spritzdüse 30 der thermischen Spritzvorrichtung 3 tritt ein Spritzstrahl 32 aus, der auf die Formoberfläche 20 der Schalungsform 2 gerichtet ist. Der Spritzstrahl 32 besteht aus einem Hochgeschwindigkeits-Gasstrahl, dem in der Spritzvorrichtung 3 Partikel eines Metallmaterials zugeführt werden. Der Gasstrahl mit den darin enthaltenen Metallpartikeln wird in bekannter Weise mittels einer Laval-Düse auf vorzugsweise Überschallgeschwindigkeit beschleunigt, so dass die Metallpartikel mit einer sehr hohen kinetischen Energie auf die Formoberfläche 20 beziehungsweise auf die dort vorgesehene Trennmittelschicht auftreffen. Durch Bewegung der die Spritzdüse 30 aufweisenden Spritzvorrichtung 3 parallel zur Formoberfläche 20 der Schalungsform 2 entlang von Längen- und Breitengraden und gegebenenfalls auch in Umfangsrichtung wird, bevorzugt schichtweise, ein im Wesentlichen homogener Materialauftrag des Metallmaterials auf die Formoberfläche 20 der Schalungsform 2 erhalten.

Dabei wird auf die eine Formoberfläche 20 bildende konvex gewölbte Oberfläche einer kugelförmigen oder kugelähnlichen Schalungsform 2 das Metallmaterial mit der Spritzvorrichtung 3 durch den Spritzstrahl 32 mittels der zumindest einen Spritzdüse 30, vorzugsweise schichtweise, aufgetragen. Die Schalungsform 2 bestimmt das Innenvolumen dieses Leichtbau-Druckbehälters 1. Ein polar an die kugelförmige oder kugelähnliche Schalungsform 2 angesetzter zylindrischer Formkern 22 bestimmt eine Öffnung 11 des Leichtbau-Druckbehälters 1, die von dem zylindrischen polaren Stutzen 12 umgeben ist, der durch die additive Fertigung integral mit der ein Behälterwandungselement 17 bildenden kugelförmigen Wandung 16 des Raumkörpers 10 ausgebildet wird.

Es können auch mehrere derartige Öffnungen und/oder Stutzen vorgesehen sein, die ebenfalls der Befestigung des Leichtbau-Druckbehälters 1 dienen können. Die kugelförmige oder kugelähnliche Schalungsform 2 wird nach der Herstellung des kugelförmigen Raumkörpers 10 zertrümmert und/oder geschmolzen und deren Reste werden nach Entfernen des Formkerns 22 durch die Öffnung 11 abgeführt. Dieser Leichtbau-Druckbehälter 1 mit dem kugelförmigen Raumkörper 10 kann beispielsweise ein Satellitentank sein.

Nach der Fertigstellung des Leichtbau-Druckbehälters 1 kann dieser thermisch und/oder mechanisch behandelt werden, um die Eigenschaften des additiv aufgebrachten Metallmaterials zu beeinflussen und insbesondere den Stutzen 12 und die Behälterwandung 16 des kugelförmigen Raumkörpers 10 an den späteren Anwendungszweck anzupassen. Beispielsweise kann die äußere Oberflächen 18 des Leichtbau-Druckbehälters 1 durch Kugelstrahlen verdichtet werden.

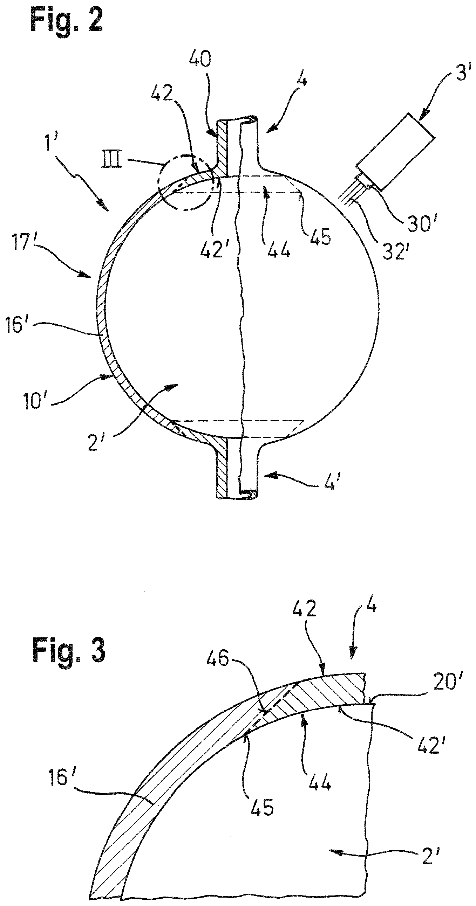

Eine alternative Ausführungsform eines kugelartigen Leichtbau-Druckbehälters 1' für einen Leichtbau-Drucktank ist in Fig. 2 dargestellt. Dieser Leichtbau-Druckbehälter 1' ist mit einem oberen polaren Befestigungselement 4 und einem unteren polaren Befestigungselement 4' ausgestattet, die im Wesentlichen baugleich ausgestaltet sein können. Daher wird nachstehend nur das obere polare Befestigungselement 4 beschrieben.

Die polaren Befestigungselemente 4, 4' sind vorab in einem gesonderten Fertigungsschritt hergestellt worden. Sie können entweder auf herkömmliche Weise mittels Umformtechnik oder mittels spanabhebender mechanischer Bearbeitung hergestellt worden sein oder sie können ebenfalls mittels eines additiven Fertigungsverfahrens gefertigt worden sein. Das jeweilige polare Befestigungselement 4, 4' weist einen Befestigungsabschnitt 40, der im Wesentlichen dem Stutzen 12 der Ausführungsform aus Fig. 1 entspricht, sowie einen Behälterwandungsabschnitt 42 auf. Der Behälterwandungsabschnitt 42 bildet eine Art Polkappe des kugelförmigen oder kugelähnlichen Leichtbau-Druckbehälters 1' und ist daher entsprechend gewölbt ausgebildet. Die konkave Krümmung der radial inneren Fläche 42' des Behälterwandungsabschnitts 42 entspricht dabei der konvexen Krümmung der Formoberfläche 20 der kugelförmigen oder kugelähnlichen Schalungsform 2 im jeweiligen polaren Bereich.

Der Behälterwandungsabschnitt 42 des polaren Befestigungselements 4 weist einen Umfangsrandbereich 44 auf, der in Fig. 2 durch jeweils zwei gestrichelte Linien dargestellt ist. In diesem Umfangsrandbereich 44 verringert sich die Wandstärke des Behälterwandungsabschnitts 42 zum freien Umfangsrand 45 des Behälterwandungsabschnitts 42 hin, wie in Fig. 3 zu erkennen ist. Dadurch wird auf der von der Formoberfläche 20 der Schalungsform 2 abgewandten Seite des Behälterwandungsabschnitts 42 eine im Querschnitt schräg verlaufende Kontaktfläche 46 ausgebildet, die den Behälterwandungsabschnitt 42 ringförmig umgibt und ihn begrenzt.

Nach dem Aufsetzen der polaren Befestigungselemente 4, 4' auf die kugelförmige oder kugelähnliche Schalungsform 2' wird mittels des aus der Spritzdüse 30' der Spritzvorrichtung 3' austretenden Spritzstrahls 32' Metallmaterial auf die Kontaktfläche 46 des Befestigungselements 4, 4' sowie auf die Formoberfläche 20' der gewölbten Schalungsform 2' aufgetragen, wobei die Spritzvorrichtung 3' über die Formoberfläche 20' der gewölbten Schalungsform 2' hinweg wandert. Dadurch wird angrenzend an den Behälterwandungsabschnitt 42 des Befestigungselements 4 die ein Behälterwandungselement 17' bestimmende kugelförmige Behälterwandung 16' des Raumkörpers 10' gebildet, wobei die Dicke der kugelförmigen Behälterwandung 16' des Raumkörpers 10' der Dicke des Behälterwandungsabschnitts 42 (in Radialrichtung gemessen) entspricht. Im Bereich der Kontaktfläche 46 bildet sich dadurch eine monolithische Verbindung des aufgespritzten Metallmaterials mit dem vorzugsweise identischen Metallmaterial des Behälterwandungsabschnitts 42 aus, so dass nach der Fertigstellung keine Grenze zwischen dem Behälterwandungsabschnitt 42 und der kugelförmigen Wandung 16' mehr feststellbar ist, was durch die gestrichelte Darstellung der Kontaktfläche 46 in Fig. 3 visualisiert ist.

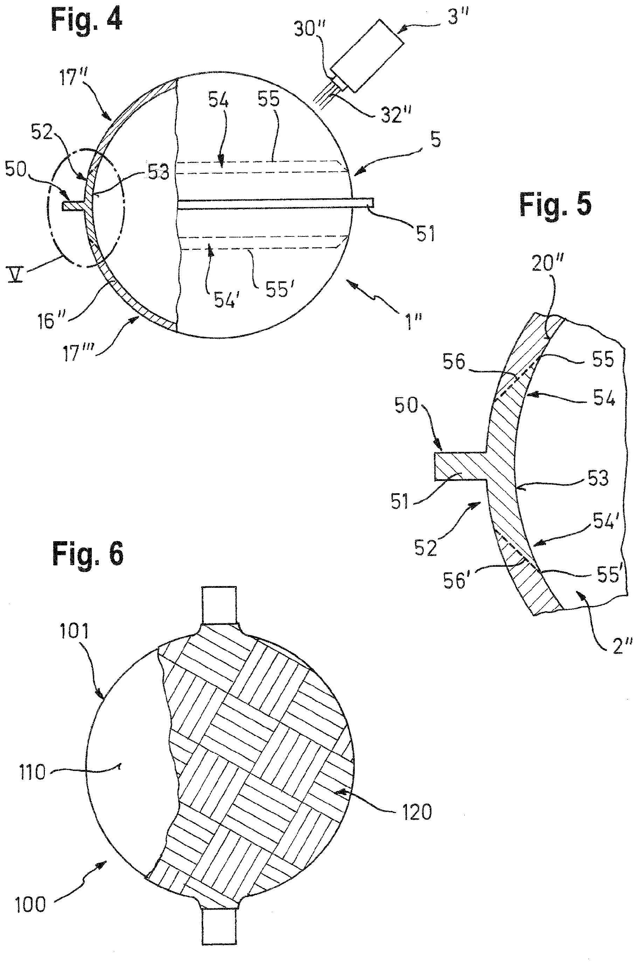

Fig. 4 zeigt eine weitere alternative Ausgestaltung eines erfindungsgemäß herstellten Leichtbau-Druckbehälters 1" für einen Leichtbau-Drucktank, der ein äquatoriales Befestigungselement 5 aufweist. Das äquatoriale Befestigungselement 5 weist einen von einem (umlaufenden oder unterbrochenen) radial nach außen vorstehenden Ringflansch 51 gebildeten Befestigungsabschnitt 50, sowie einen ringförmigen Behälterwandungsabschnitt 52 auf. Der Behälterwandungsabschnitt 52 ist im Vertikalschnitt leicht gekrümmt ausgebildet, wobei seine vom Ringflansch 51 abgewandte radial innere Oberfläche 53 eine geringfügige konkave Krümmung aufweist, die nur in etwa der konvexen Krümmung der Formoberfläche 20" der Schalungsform 2" entspricht und ein Aufsetzen des äquatorialen Befestigungselements 5 auf die Schalungsform 2" gestattet. Die Wandstärke des Behälterwandungsabschnitts 52 ist (bis auf die Umfangsrandbereiche) gleichbleibend, so dass auch die radial äußere Oberfläche des Behälterwandungsabschnitts 52 entsprechend gekrümmt ist, wie es in der vergrößerten Darstellung der Fig. 5 zu sehen ist. Die radial innere Oberfläche 53 des Behälterwandungsabschnitt kann aber auch zylindrisch sein, um das Aufsetzen auf die in diesem Bereich dann ebenfalls zylindrisch ausgebildete Schalungsform 2" zu erleichtern.

Das äquatoriale Befestigungselement 5 kann auch horizontal geteilt sein, um das Aufsetzen der zwei Hälften auf die Schalungsform von ober und von unten zu ermöglichen, wobei dann aber zwei Halbschalen des Leichtbau-Druckbehälters 1' entstehen, die später zusammenzufügen sind.

Der umlaufene Behälterwandungsabschnitt 52 weist einen oberen Umfangsrandbereich 54 und einen unteren Umfangsrandbereich 54' auf, dessen Wandstärke sich unter Ausbildung einer jeweiligen im Querschnitt schräg verlaufenden Kontaktfläche 56, 56' zum jeweiligen freien Umfangsrand 55, 55' hin verjüngt.

Das äquatoriale Befestigungselement 5 kann entweder auf herkömmliche Weise mittels Umformtechnik oder mittels spanabhebender mechanischer Bearbeitung hergestellt worden sein oder es kann ebenfalls mittels eines additiven Fertigungsverfahrens gefertigt worden sein.

Nach dem Aufsetzen des äquatorialen Befestigungselements 5 auf die kugelförmige oder kugelähnliche Schalungsform 2" wird mittels des aus der Spritzdüse 30" der Spritzvorrichtung 3" austretenden Spritzstrahls 32" das Metallmaterial auf die jeweilige Kontaktfläche 56, 56' des Befestigungselements 5 sowie auf den sich daran anschließenden Bereich der Formoberfläche 20" der gewölbten Schalungsform 2" aufgetragen, wobei die Spritzvorrichtung 3" über die Formoberfläche 20" der gewölbten Schalungsform 2" wandert. Dadurch wird angrenzend an den jeweiligen Behälterwandungsabschnitt 52 des Befestigungselements 5 ein oberes Behälterwandungselement 17" beziehungsweise ein unteres Behälterwandungselement 17"' gebildet, die gemeinsam die kugelförmige Wandung 16" des Raumkörpers 10" bestimmen, wobei die Dicke der kugelförmigen Wandung 16" des Raumkörpers 10" der Dicke des Behälterwandungsabschnitts 52 (in Radialrichtung gemessen) entspricht. Im Bereich der jeweiligen Kontaktfläche 56, 56' bildet sich dadurch eine monolithische Verbindung des aufgespritzten Metallmaterials mit dem vorzugsweise identischen Metallmaterial des Behälterwandungsabschnitts 52 aus, so dass nach der Fertigstellung keine Grenze zwischen dem Behälterwandungsabschnitt 52 und der kugelförmigen Wandung 16" mehr feststellbar ist, was durch die gestrichelte Darstellung der jeweiligen Kontaktfläche 56, 56' in Fig. 5 visualisiert ist.

Fig. 6 zeigt einen Leichtbau-Drucktank 100 mit einem Leichtbau-Druckbehälter 101 mit polaren Befestigungselementen, wie er beispielsweise in Fig. 2 gezeigt ist, wobei die äußere Oberfläche 110 des Leichtbau-Druckbehälters 101 mit einem Mantel 120 aus einem gewickelten Faserverbundmaterial, beispielsweise aus kohlefaserverstärktem Kunststoff (CFK) umwickelt ist, um dem Leichtbau-Drucktank 100 eine größere mechanische Stabilität zu verleihen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Leichtbau-Druckbehälter
- 1': Leichtbau-Druckbehälter
- 1": Leichtbau-Druckbehälter
- 2: Schalungsform
- 2": Schalungsform
- 3: Spritzvorrichtung
- 4: polares Befestigungselement
- 4': polares Befestigungselement
- 5: äquatoriales Befestigungselement
- 10: kugelförmiger Raumkörper
- 10': kugelförmiger Raumkörper
- 11: Öffnung
- 12: Stutzen
- 14: polares Befestigungselement
- 16: kugelförmige Wandung
- 16': kugelförmige Wandung
- 17: Behälterwandungselement
- 17': Behälterwandungselement
- 17": Behälterwandungselement
- 17‴: Behälterwandungselement
- 18: äußere Oberfläche
- 20: Formoberfläche
- 20": Formoberfläche
- 22: zylindrischer Formkern
- 32: Spritzstrahl
- 40: Befestigungsabschnitt
- 42: Behälterwandungsabschnitt
- 42': radial innere Fläche des Behälterwandungsabschnitts 42
- 44: Umfangsrandbereich
- 46: Kontaktfläche
- 51: Ringflansch
- 52: ringförmiger Behälterwandungsabschnitt
- 53: radial innere Oberfläche
- 54: oberer Umfangswandbereich
- 54': unterer Umfangswandbereich
- 55: Umfangsrand
- 55': Umfangsrand
- 56: Kontaktfläche
- 56': Kontaktfläche
- 100: Leichtbau-Drucktank
- 101: Leichtbau-Druckbehälter
- 110: äußere Oberfläche
- 120: Mantel

## Patentansprüche

1. Verfahren zur Herstellung eines Leichtbau-Drucktanks mit einem Leichtbau-Druckbehälter (1; 1'; 1"; 101) aus einem Metallmaterial mit zumindest einem polaren oder äquatorialen Befestigungselement (14; 4, 4'; 5) und einer damit verbundenen Behälterwandung (16; 16'; 16"); wobei zumindest die Behälterwandung (16; 16'; 16") durch additive Fertigung mittels eines thermischen Spritzverfahrens durch Auftragen des Metallmaterials durch einen Spritzstrahl (32; 32'; 32") mittels zumindest einer Spritzdüse (30; 30'; 30") einer thermischen Spritzvorrichtung (3; 3'; 3") auf eine Formoberfläche (20; 20'; 20") einer einen Formkörper bildenden gewölbten Schalungsform (2; 2'; 2") integral mit dem zumindest einen polaren oder äquatorialen Befestigungselement (14; 4, 4'; 5) ausgebildet wird; mit den Schritten
a) Bereitstellen des zumindest einen polaren oder äquatorialen Befestigungselements (4, 4'; 5), das zumindest einen Befestigungsabschnitt (40; 50) und zumindest einen Behälterwandungsabschnitt (42; 52) aufweist, der einen Abschnitt der Behälterwandung des nach dem Verfahren hergestellten Leichtbau-Drucktanks bildet, wobei der Behälterwandungsabschnitt (42; 52) zumindest einen Umfangsrandbereich (44; 54, 54') aufweist, dessen Wandstärke sich unter Ausbildung einer im Querschnitt schräg verlaufenden Kontaktfläche (46; 56, 56') zum freien Umfangsrand (45; 55, 55') hin verjüngt;
b) Positionieren des zumindest einen polaren oder äquatorialen Befestigungselements (4, 4'; 5) an oder auf der konkaven oder konvexen Formoberfläche (20; 20'; 20") der gewölbten Schalungsform (2; 2'; 2") derart, dass die Kontaktfläche (46; 56, 56') von der Formoberfläche (20; 20'; 20") weg weist;
c) Auftragen des Metallmaterials durch einen auf die Formoberfläche (20; 20'; 20") gerichteten Spritzstrahl (32; 32'; 32") mittels zumindest einer Spritzdüse (30; 30'; 30") gemäß dem thermischen Spritzverfahren auf die Kontaktfläche (46; 56, 56') des Befestigungselements (4, 4'; 5) und auf die Formoberfläche (20; 20'; 20") der gewölbten Schalungsform (2; 2'; 2"), wobei die thermische Spritzvorrichtung (3; 3'; 3") über die Formoberfläche (20; 20'; 20") der gewölbten Schalungsform (2; 2'; 2") hinweg wandert, zur Bildung eines sich nahtlos an die Kontaktfläche (46; 56, 56') anschließenden und mit dem Behälterwandungsabschnitt (42; 52) integral ausgebildeten, gewölbten Behälterwandungselements (17', 17"; 17‴);
d) Trennen der Einheit aus dem zumindest einen Befestigungselement (4, 4'; 5) und dem Behälterwandungselement (17', 17"; 17‴) von der gewölbten Schalungsform (2; 2'; 2").

2. Verfahren nach Anspruch 1,
**dadurch gekennzeichnet,**
**dass** der Leichtbau-Druckbehälter (1; 1'; 1"; 101) einen kugelförmigen oder kugelähnlichen Raumkörper (10) aufweist, der durch Auftragen des Metallmaterials durch den Spritzstrahl (32; 32'; 32") mittels der zumindest einen Spritzdüse (30; 30'; 30") auf die eine Formoberfläche (20; 20'; 20") bildende konvexe Außenoberfläche oder konkave Innenoberfläche der kugelförmig oder kugelähnlich gewölbten Schalungsform (2; 2'; 2") nahtlos hergestellt wird.

3. Verfahren nach Anspruch 1 oder 2,
**dadurch gekennzeichnet,**
**dass** die Bereitstellung des zumindest einen polaren oder äquatorialen Befestigungselements (4, 4'; 5) mit den folgenden Schritten erfolgt:
a1) Bereitstellen einer Befestigungselement-Schalungsform (2; 2'; 2") als Außenschalung oder als Innenschalung;
a2) Auftragen des Metallmaterials durch einen Spritzstrahl (32; 32'; 32") mittels zumindest einer Spritzdüse (30; 30'; 30") gemäß dem thermischen Spritzverfahren auf eine Formoberfläche (20; 20'; 20") am Innenumfang oder am Außenumfang der Befestigungselement-Schalungsform (2; 2'; 2") zur Bildung zumindest eines Befestigungsabschnitts (40; 50) und zumindest eines Behälterwandungsabschnitts (42; 52);
a3) Ausbilden eines sich zum freien Umfangsrand (45; 55, 55') hin verjüngenden Umfangsrandbereichs (44; 54, 54') des Behälterwandungsabschnitts (42; 52) mit einer im Querschnitt schräg verlaufenden Kontaktfläche (46; 56, 56');
a4) Trennen des Befestigungselements (4, 4'; 5) von der Befestigungselement-Schalungsform (2; 2'; 2").

4. Verfahren nach Anspruch 3,
**dadurch gekennzeichnet,**
**dass** die im Querschnitt schräg verlaufende Kontaktfläche (46; 56, 56') nach dem Entnehmen des Befestigungselements (4, 4'; 5) aus der Befestigungselement-Schalungsform (2; 2'; 2") mechanisch bearbeitet wird.

5. Verfahren nach einem der Ansprüche 1 bis 4,
**dadurch gekennzeichnet,**
**dass** charakteristische Eigenschaften des Spritzstrahls (32; 32'; 32") der zumindest einen Spritzdüse (30; 30'; 30") geändert werden, wenn dieser von der im Querschnitt schräg verlaufenden Kontaktfläche (46; 56, 56') weiter wandert und auf die Formoberfläche (20; 20'; 20") auftrifft, auf der noch kein Material mittels des thermischen Spritzverfahrens aufgetragen worden ist, und dass die charakteristischen Eigenschaften des Spritzstrahls (32; 32'; 32") wieder zurückgeändert werden, wenn dieser von der Formoberfläche (20; 20'; 20"), auf der noch kein Material mittels des thermischen Spritzverfahrens aufgetragen worden war, weiter wandert und auf die im Querschnitt schräg verlaufende Kontaktfläche (46; 56, 56') auftrifft.

6. Verfahren nach einem der vorhergehenden Ansprüche,
**dadurch gekennzeichnet,**
**dass** nach der Fertigstellung der Einheit aus dem zumindest einen Befestigungselement (14; 4, 4'; 5) und dem Behälterwandungselement (17; 17', 17"; 17‴) eine thermische und/oder mechanische Behandlung zumindest des Behälterwandungselements (17; 17', 17"; 17"') durchgeführt wird.

7. Verfahren nach einem der vorhergehenden Ansprüche,
**dadurch gekennzeichnet,**
**dass** der fertige Leichtbau-Druckbehälter (1; 1'; 1"; 101) zumindest im Bereich seiner Behälterwandung mit einem Mantel (120) aus einem Faserverbundwerkstoff umgeben wird.

8. Verfahren nach Anspruch 7,
**dadurch gekennzeichnet,**
**dass** der den Leichtbau-Druckbehälter (1; 1'; 1"; 101) zumindest im Bereich seiner Behälterwandung umgebende Mantel (120) aus Kohlefaser-Verbundwerkstoff besteht oder dieses Material aufweist.

## Claims

1. A method of manufacturing a lightweight pressure tank comprising a lightweight pressure vessel (1; 1'; 1"; 101) of a metal material having at least one polar or equatorial mounting element (14; 4, 4'; 5) and a vessel wall (16; 16'; 16") connected thereto;
wherein at least the vessel wall (16; 16'; 16") is formed by additive manufacturing by means of a thermal spraying process by applying the metal material by a spray jet (32; 32'; 32") by means of at least one spray nozzle (30; 30'; 30") of a thermal spraying device (3; 3'; 3") onto a mould surface (20; 20'; 20") of a domed formwork mould (2; 2'; 2") forming a mould body, integrally with the at least one polar or equatorial mounting element (14; 4, 4'; 5); with the steps of
a) providing the at least one polar or equatorial mounting element (4, 4'; 5), which has at least one mounting portion (40; 50) and at least one vessel wall portion (42; 52), which forms a portion of the vessel wall of the lightweight pressure tank produced by the method, wherein the vessel wall portion (42; 52) has at least one circumferential edge region (44; 54, 54'), the wall thickness of which tapers towards the free circumferential edge (45; 55, 55') to form a contact surface (46; 56, 56') extending obliquely in cross-section;
b) positioning the at least one polar or equatorial mounting element (4, 4'; 5) at or on the concave or convex mould surface (20; 20'; 20") of the domed formwork mould (2; 2'; 2") in such a way that the contact surface (46; 56, 56') faces away from the mould surface (20; 20'; 20");
c) application of the metal material by a spray jet (32; 32'; 32") directed onto the mould surface (20; 20'; 20") by means of at least one spray nozzle (30; 30'; 30") in accordance with the thermal spray method onto the contact surface (46; 56, 56') of the mounting element (4, 4'; 5) and onto the mould surface (20; 20'; 20") of the domed formwork mould (2; 2'; 2"), wherein the thermal spray device (3; 3'; 3") moves over the mould surface (20; 20'; 20") of the domed formwork mould (2; 2'; 2"); 2"), the thermal spray device (3; 3'; 3") travelling over the mould surface (20; 20'; 20") of the domed formwork mould (2; 2'; 2") to form a domed vessel wall member (17', 17"; 17‴) seamlessly adjoining the contact surface (46; 56, 56') and integral with the vessel wall portion (42; 52);
d) separating the assembly of the at least one mounting element (4, 4'; 5) and the vessel wall element (17', 17"; 17‴) from the domed formwork mould (2; 2'; 2").

2. The method according to claim 1,
**characterised**
**in that** the lightweight pressure vessel (1; 1'; 1"; 101) has a spherical or sphere-like spatial body (10) which is formed by applying the metal material by the spray jet (32; 32'; 32") by means of the at least one spray nozzle (30; 30'; 30") onto the convex outer surface or concave inner surface of the spherical or spherical-like domed formwork mould (2; 2'; 2") forming a mould surface (20; 20'; 20").

3. The method according to claim 1 or 2,
**characterised**
**in that** the provision of the at least one polar or equatorial mounting element (4, 4'; 5) is carried out with the following steps:
a1) Providing a mounting element formwork (2; 2'; 2") as external formwork or as internal formwork;
a2) applying the metal material by a spray jet (32; 32'; 32") by means of at least one spray nozzle (30; 30'; 30") according to the thermal spraying method onto a mould surface (20; 20'; 20") at the inner circumference or at the outer circumference of the mounting element formwork (2; 2'; 2") for forming at least one mounting portion (40; 50) and at least one vessel wall portion (42; 52);
a3) forming a peripheral edge region (44; 54, 54') of the vessel wall section (42; 52) tapering towards the free peripheral edge (45; 55, 55') with a contact surface (46; 56, 56') extending obliquely in cross-section;
a4) Separating the mounting element (4, 4'; 5) from the mounting element formwork (2; 2'; 2").

4. The method according to claim 3,
**characterised**
**in that** the contact surface (46; 56, 56'), which is oblique in cross-section, is mechanically machined after the mounting element (4, 4'; 5) has been removed from the mounting element formwork (2; 2'; 2").

5. The method according to any one of claims 1 to 4,
**characterised**
**in that** characteristic properties of the spray jet (32; 32'; 32") of the at least one spray nozzle (30; 30'; 30") are changed when it travels further from the contact surface (46; 56, 56'), which extends obliquely in cross-section, and hits the mould surface (20; 20'; 20") on which no material has yet been applied by means of the thermal spraying process, and that the characteristic properties of the spray jet (32; 32'; 32") are changed back again when it travels further from the mould surface (20; 20'; 20") onto which no material has yet been applied by means of the thermal spraying process, and hits the contact surface (46; 56, 56') extending obliquely in cross-section.

6. The method according to any of the preceding claims,
**characterised**
**in that**, after completion of the unit comprising the at least one mounting element (14; 4, 4'; 5) and the vessel wall element (17; 17', 17"; 17‴), a thermal and/or mechanical treatment is carried out at least on the vessel wall element (17; 17', 17"; 17‴).

7. The method according to any of the preceding claims,
**characterised**
**in that** the finished lightweight pressure vessel (1; 1'; 1"; 101) is surrounded, at least in the region of its vessel wall, by a jacket (120) made of a fiber composite material.

8. The method according to claim 7,
**characterised**
**in that** the jacket (120) surrounding the lightweight pressure vessel (1; 1'; 1"; 101) at least in the region of its vessel wall consists of carbon fiber composite material or comprises this material.

## Revendications

1. Procédé de fabrication d'un réservoir léger sous pression avec un récipient léger sous pression (1 ; 1' ; 1 " ; 101) en un matériau métallique, comprenant au moins un élément de fixation polaire ou équatorial (14 ; 4, 4' ; 5) et une paroi de récipient (16 ; 16' ; 16") reliée à celui-ci ;
dans lequel au moins la paroi de récipient (16 ; 16' ; 16") est réalisée intégralement avec ledit au moins un élément de fixation polaire ou équatorial (14 ; 4, 4' ; 5) par fabrication additive au moyen d'un procédé de projection thermique par application du matériau métallique en un jet de projection (32 ; 32' ; 32") sur une surface de moulage (20 ; 20' ; 20") d'un moule de coffrage bombé (2 ; 2' ; 2") constituant un corps de moulage, au moyen d'au moins une buse de projection (30 ; 30' ; 30") d'un dispositif de projection thermique (3 ; 3' ; 3"), comprenant les étapes consistant à
a) fournir ledit au moins un élément de fixation polaire ou équatorial (4, 4' ; 5) qui comprend au moins une portion de fixation (40 ; 50) et au moins une portion de paroi de récipient (42 ; 52), laquelle constitue une portion de la paroi de récipient du réservoir léger sous pression fabriqué selon ledit procédé, la portion de paroi de récipient (42 ; 52) présentant au moins une zone de bord périphérique (44 ; 54, 54') dont l'épaisseur de paroi se rétrécit vers le bord périphérique libre (45 ; 55, 55') en constituant une surface de contact (46 ; 56, 56') qui s'étend en oblique en section transversale ;
b) positionner ledit au moins un élément de fixation polaire ou équatorial (4, 4' ; 5) contre ou sur la surface de moulage concave ou convexe (20 ; 20' ; 20") du moule de coffrage bombé (2 ; 2' ; 2) de telle sorte que la surface de contact (46 ; 56, 56') est détournée de la surface de moulage (20 ; 20' ; 20") ;
c) appliquer le matériau métallique en un jet de projection (32 ; 32' ; 32"), dirigé vers la surface de moulage (20 ; 20 ; 20"), sur la surface de contact (46 ; 56, 56') de l'élément de fixation (4, 4' ; 5) et sur la surface de moulage (20 ; 20' ; 20") du moule de coffrage bombé (2 ; 2' ; 2) au moyen d'au moins une buse de projection (30 ; 30' ; 30") selon le procédé de projection thermique, sachant que le dispositif de projection thermique (3 ; 3' ; 3") se déplace le long de la surface de moulage (20 ; 20' ; 20") du moule de coffrage bombé (2 ; 2' ; 2"), afin de constituer un élément de paroi de récipient bombé (17', 17" ; 17‴) se raccordant sans soudure à la surface de contact (46 ; 56, 56') et réalisé intégralement avec la portion de paroi de récipient (42 ; 52) ;
d) séparer l'ensemble, constitué dudit au moins un élément de fixation (4, 4' ; 5) et dudit élément de paroi de récipient (17', 17" ; 17'"), du moule de coffrage bombé (2 ; 2' ; 2).

2. Procédé selon la revendication 1 ,
**caractérisé en ce que**
le réservoir léger sous pression (1 ; 1' ; 1" ; 101) présente un corps spatial sphérique ou de type sphérique (10) qui est réalisé sans soudure par application du matériau métallique en le jet de projection (32 ; 32' ; 32") sur la surface extérieure convexe ou sur la surface intérieure concave, constituant une surface de moulage (20 ; 20' ; 20"), du moule de coffrage (2 ; 2' ; 2) bombé en forme de sphère ou de façon similaire à une sphère, au moyen de ladite au moins une buse de projection (30 ; 30' ; 30").

3. Procédé selon la revendication 1 ou 2,
**caractérisé en ce que** la fourniture dudit au moins un élément de fixation polaire ou équatorial (4, 4' ; 5) comprend les étapes suivantes consistant à :
a1) fournir un moule de coffrage pour élément de fixation (2 ; 2' ; 2) sous forme de coffrage extérieur ou de coffrage intérieur ;
a2) appliquer le matériau métallique en un jet de projection (32 ; 32' ; 32") sur une surface de moulage (20 ; 20' ; 20") à la périphérie intérieure ou à la périphérie extérieure du moule de coffrage pour élément de fixation (2 ; 2' ; 2) au moyen d'au moins une buse de projection (30 ; 30' ; 30") selon le procédé de projection thermique, afin de constituer au moins une portion de fixation (40 ; 50) et au moins une portion de paroi de récipient (42 ; 52) ;
a3) réaliser une zone de bord périphérique (44 ; 54, 54') de la portion de paroi de récipient (42 ; 52), se rétrécissant vers le bord périphérique libre (45 ; 55, 55'), avec une surface de contact (46 ; 56, 56') s'étendant en oblique en section transversale ;
a4) séparer l'élément de fixation (4, 4' ; 5) du moule de coffrage pour élément de fixation (2 ; 2' ; 2).

4. Procédé selon la revendication 3,
**caractérisé en ce que**
après le retrait de l'élément de fixation (4, 4' ; 5) du moule de coffrage pour élément de fixation (2 ; 2' ; 2), la surface de contact (46 ; 56, 56') s'étendant en oblique en section transversale est usinée mécaniquement.

5. Procédé selon l'une des revendications 1 à 4,
**caractérisé en ce que**
des propriétés caractéristiques du jet de projection (32 ; 32' ; 32") de ladite au moins une buse de projection (30 ; 30' ; 30") sont modifiées lorsque celui-ci continue à se déplacer depuis la surface de contact (46 ; 56, 56') s'étendant en oblique en section transversale et qu'il vient tomber sur la surface de moulage (20 ; 20' ; 20") sur laquelle aucun matériau n'a encore été déposé au moyen du procédé de projection thermique, et
**en ce que** les propriétés caractéristiques du jet de projection (32 ; 32' ; 32") sont à nouveau modifiées lorsque celui-ci continue à se déplacer depuis la surface de moulage (20 ; 20' ; 20") sur laquelle aucun matériau n'a encore été appliqué au moyen du procédé de projection thermique, et qu'il vient tomber sur la surface de contact (46 ; 56, 56') s'étendant en oblique en section transversale.

6. Procédé selon l'une des revendications précédentes,
**caractérisé en ce que**
une fois que l'ensemble constitué dudit au moins un élément de fixation (14 ; 4, 4' ; 5) et de l'élément de paroi de récipient (17 ; 17', 17" ; 17‴) est achevé, on réalise un traitement thermique et/ou mécanique d'au moins l'élément de paroi de récipient (17 ; 17', 17" ; 17'").

7. Procédé selon l'une des revendications précédentes,
**caractérisé en ce que**
le récipient léger sous pression (1 ; 1' ; 1" ; 101) achevé est entouré, au moins au niveau de sa paroi, d'une enveloppe (120) en matériau composite à fibres.

8. Procédé selon la revendication 7,
**caractérisé en ce que**
l'enveloppe (120) entourant le récipient léger sous pression (1 ; 1' ; 1" ; 101) au moins au niveau de sa paroi de récipient est en matériau composite à fibres de carbone ou comprend ce matériau.
